# FASCICULE DE BREVET EUROPEEN

(11) **EP 2 825 336 B1**
(45) Date de publication et mention de la délivrance du brevet: **20.01.2016**
(21) Numéro de dépôt: 13715309.4
(22) Date de dépôt: 12.03.2013
(51) Int. Cl.: B22C 3/00, B22C 9/10

(54) **PROCÉDÉ D'IMPRÉGNATION DE NOYAUX CERAMIQUE POUR LA FABRICATION D'AUBES DE TURBOMACHINES**
METHODE ZUM IMPRÄGNIEREN VON KERAMISCHEN KERNEN FÜR DIE HERSTELLUNG VON TURBOMASCHINENSCHAUFELN
METHOD OF IMPREGNATING CERAMIC CORES FOR THE MANUFACTURE OF TURBOMACHINE BLADES

(30) Priorité: 16.03.2012 FR 1252404
(43) Date de publication de la demande: 21.01.2015
(73) Titulaire: SNECMA, 75015 Paris (FR)
(72) Inventeur: LANGLOIS, Chantal, F-77550 Moissy-Cramayel Cedex (FR)
(74) Mandataire: Gevers France
(86) Numéro de dépôt international: PCT/FR2013/050521
(87) Numéro de publication internationale: WO 2013/136012

(56) Documents cités:
- GB-A- 2 263 658
- GB-A- 2 373 747
- US-A- 4 284 121
- US-A- 4 685 503

## Description

Le domaine de la présente invention est des turbomachines et, plus particulièrement, celui de la fabrication des aubages métalliques de ces turbomachines.

Pour fabriquer des pièces telles que des aubages métalliques de turbomachines, qui présentent des cavités internes à géométrie complexe, on utilise classiquement la technique connue sous le nom de fonderie à cire perdue. Celle-ci consiste à réaliser d'abord un modèle de la pièce en cire ou en un autre matériau équivalent, facilement éliminable par la suite.

La fabrication passe tout d'abord par la réalisation d'une pièce interne formant un noyau de fonderie et figurant les cavités internes de l'aubage. Puis on utilise pour former le modèle en cire, un moule d'injection dans lequel on place le noyau et on y injecte la cire. On confectionne ensuite autour de ce modèle une carapace céramique constituée d'une pluralité de couches, à l'aide de trempages successifs dans plusieurs barbotines. Les barbotines sont composées de particules de matériau céramique, avec un liant colloïdal minéral et, le cas échéant, des adjuvants.

On procède alors au décirage du moule carapace, qui est une opération par laquelle on élimine le matériau constituant le modèle en cire d'origine. Après élimination du modèle, on obtient un moule céramique dont la cavité reproduit toutes les formes de l'aube et qui renferme encore le noyau céramique destiné à générer les cavités internes de celle-ci. Le moule subit ensuite un traitement thermique à haute température ou « cuisson », qui lui confère les propriétés mécaniques nécessaires.

Le moule carapace est ainsi prêt pour la fabrication de la pièce métallique par coulée. Après contrôle de l'intégrité interne et externe du moule carapace, l'étape suivante consiste à couler un métal en fusion, qui vient occuper les vides entre la paroi intérieure du moule carapace et le noyau, puis à le solidifier. Enfin, après coulée de l'alliage, on casse la carapace par une opération de décochage, puis on élimine le noyau céramique, qui est resté enfermé dans l'aube, par un traitement chimique et on termine en parachevant par usinage ou polissage la fabrication de la pièce métallique.

Un problème couramment rencontré avec les noyaux céramiques est qu'ils ont des géométries très fines et qu'ils peuvent avoir tendance à se casser ou bien à se déformer lors de l'opération de surmoulage par injection de la cire. Il est donc nécessaire de procéder à une opération de consolidation en fin de fabrication. Un des procédés actuellement mis en oeuvre consiste à combler la porosité du noyau par une résine mélangée à un diluant, puis à faire polymériser cette résine, ce qui permet alors de quadrupler sa résistance mécanique. Les produits couramment utilisés sont une résine poly époxyde, telle que l'araldite, et un diluant composé d'un mélange de solvants, comme le toluène et le méthanol.

L'inconvénient avec ces produits est qu'ils sont généralement toxiques (classés CMR, pour cancérogènes, mutagènes et reprotoxiques) et qu'ils nécessitent de la part des opérateurs la mise en oeuvre de mesures de sauvegarde. Ils nécessitent, entre autres, en vertu du Code du Travail, le port d'équipements individuels de protection et un suivi spécifique d'exposition pour chaque opérateur ainsi que la mise en conformité des locaux, systèmes d'aspiration et moyens de séchage aux normes de la réglementation ATEX (ATmosphères EXplosives). Une solution a été apportée par la demande de brevet GB2263658 qui préconise d'utiliser l'eau comme solvant et différents produits d'imprégnation, dont l'alcool polyvinylique. Il préconise des concentrations d'alcool dans la limite de 10%, c'est-à-dire d'environ 10 grammes par litre d'eau, et considère que cette concentration est une valeur limite, à ne pas dépasser du fait alors d'une trop grande viscosité du produit.

La demanderesse s'est alors interrogée sur cette limite et a voulu savoir si des concentrations plus élevées ne pourraient pas encore améliorer la situation et analyser les contraintes qui en découleraient.

La présente invention a pour but de proposer un produit plus performant que les produits actuels pour le renforcement mécanique des noyaux, et qui respecte les obligations en matière de protection de la sécurité, de la santé des personnels et de la protection de l'environnement. A cet effet, l'invention a pour objet un procédé d'imprégnation pour le renforcement mécanique d'un noyau céramique utilisé dans la fabrication de pièces de turbomachines par fonderie à la cire perdue, comportant un trempage du noyau dans un mélange obtenu par dissolution d'alcool polyvinylique PVAl dans de l'eau suivi d'une immersion du noyau dans de l'eau pure et une polymérisation à chaud, caractérisé en ce que le dosage est compris entre 100 et 200 g de PVAl par litre d'eau.

Avantageusement le temps d'imprégnation par trempage est compris entre 20 min et 1h30. Un temps long est nécessaire pour une bonne pénétration du produit d'imprégnation dans les pores du noyau céramique, du fait de sa relativement grande viscosité.

De façon préférentielle la polymérisation s'effectue à une température comprise entre 90 et 120°C.

De façon plus préférentielle la polymérisation s'effectue pendant une durée comprise entre 30 min et 2 heures.

L'invention porte également sur un procédé de fabrication, par fonderie à la cire perdue, d'aubes de turbomachines présentant des cavités internes, ledit procédé comportant une étape de réalisation d'un noyau céramique représentatif desdites cavités internes, caractérisé en ce qu'il comporte une étape de renforcement mécanique dudit noyau par un procédé tel que décrit ci-dessus.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est un tableau donnant les résultats obtenus par imprégnation d'un noyau d'aube avec un produit selon l'invention ;
- les figures 2 et 3 sont des vues schématiques comparatives de deux propriétés physiques d'un matériau obtenu à l'aide d'un produit d'imprégnation selon l'invention et à l'aide d'un produit de l'art antérieur.

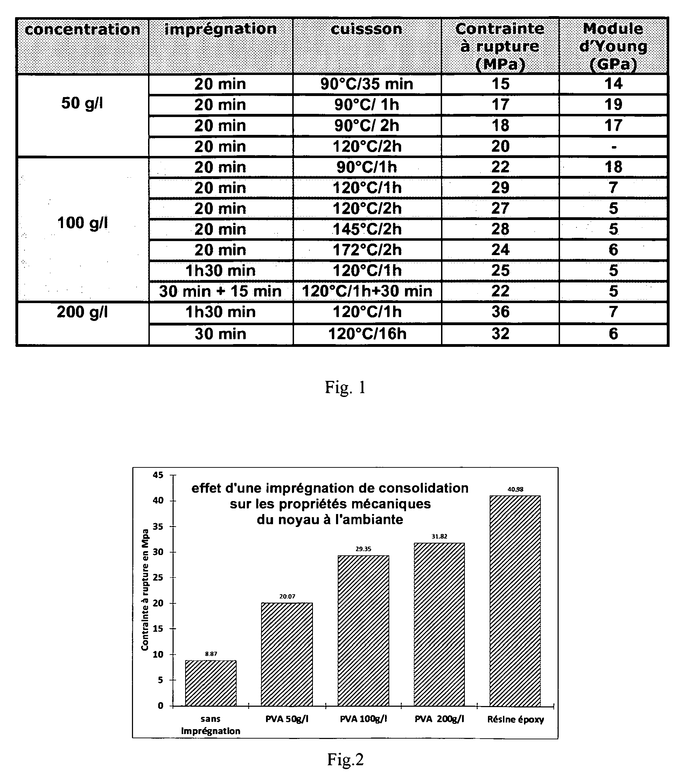

En se référant à la figure 1, on voit, pour diverses concentrations d'alcool polyvinylique (PVAl) dans de l'eau et pour diverses conditions de fabrication (temps d'imprégnation et temps et température de cuisson) les résultats obtenus sur une éprouvette représentative du noyau d'un modèle en cire d'une aube de turbomachine.

Les concentrations choisies en alcool sont respectivement 50g/l, 100 g/l et 200 g/l et les temps d'imprégnation de l'éprouvette vont de 20 min à 1h30. Parallèlement les temps et températures de cuisson vont, respectivement, de 35 min à 1h30, avec un cas à 16h, et de 90° à 172°C. On constate que :
- pour une concentration de 50 g/l, avec un temps d'imprégnation de 20 min et une cuisson de 90° à 120° pendant 35 min à 2h, la contrainte obtenue à rupture va de 14.87 à 20.07 MPa et le module d'Young varie de 13.9 à 16.87 GPa.
- pour une concentration de 100 g/l, avec une temps d'imprégnation allant de 20 min à 1h30 et une cuisson à une température comprise entre 90 et 172° pendant 1 à 2h, la contrainte à rupture va de 21.52 à 29.4 MPa et le module d'Young varie de 50.3 à 18.11 GPa.
- pour une concentration de 200 g/l, avec un temps d'imprégnation allant de 30 à 1h30 et une cuisson à une température de 120° pendant 1 à 16h, la contrainte à rupture va de 31.5 à 35.79 MPa et le module d'Young varie de 6.67 à 6.53 GPa.

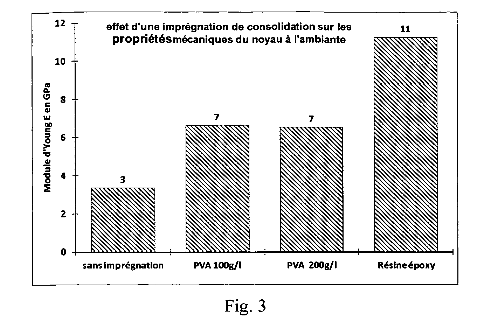

En se référant maintenant aux figures 2 et 3 on voit, respectivement, la contrainte à rupture et le module d'Young pour cinq types d'éprouvettes : une éprouvette sans imprégnation, une éprouvette imprégnée par du PVAl dosé à 50g/l dans de l'eau, une éprouvette imprégnée par du PVAl dosé à 100g/l, une éprouvette imprégnée par du PVAl dosé à 200g/l et une éprouvette imprégnée par de la résine époxy selon l'art antérieur.

Pour répondre au problème posé, l'invention propose tout d'abord d'abandonner l'utilisation des diluants du type toluène ou méthanol de l'art antérieur et de les remplacer par de l'eau, afin d'éliminer les risques liés à la santé ou au respect de l'environnement. Pour remplacer les produits de l'art antérieur toute une série d'essais a été effectuée avec différents produits du commerce et différentes concentrations dans l'eau pour ces produits. Différents paramètres concernant la mise en solution du produit (concentration, agitation, température) et différents paramètres de séchage et de polymérisation (température, temps) ont également été évalués. En conclusion l'invention a retenu comme produit d'imprégnation, l'alcool polyvinylique qui est soluble dans l'eau et dont les propriétés adhésives et émulsifiantes sont connues. L'alcool polyvinylique, ou PVAl, de formule chimique -(CH2CHOH)n-, est obtenu par hydrolyse alcaline (soude, potasse) de l'acétate de polyvinyle. Il peut être utilisé comme agent de démoulage ou comme bouche-pores et présente donc l'intérêt de former un film régulier, qui peut se placer autour un moule et, donc, dont on peut faire en sorte qu'il se place autour du noyau pour les modèles en cire dans le cas de la fabrication d'aubes de turbomachines. Ce produit, qui a été finalement préféré après une série d'essais conduits sur plusieurs produits solubles ayant des propriétés filmogènes d'enduction et de collage, présente l'avantage de pénétrer dans les pores de surface du noyau, de les boucher et de créer ainsi une coque que l'on solidifie par séchage ou par polymérisation. Suite aux essais réalisés, les concentrations préconisées sont de 100 à 200g/l selon l'augmentation des propriétés mécaniques désirée. L'action de renforcement mécanique apportée par le produit de l'invention est alors double : il produit un premier renforcement par l'élimination d'une partie de la porosité, celle-ci tendant à abaisser les propriétés mécaniques de la céramique, et un second renforcement par la formation d'un enduit entourant le noyau, l'enduit ayant lui-même ses propres propriétés mécaniques.

La mise en oeuvre préconisée de l'invention consiste à préparer un mélange par dissolution du PVAl dans de l'eau chauffée à 80°, pour accélérer sa dissolution. Les noyaux sont alors immergés dans le mélange, puis dans de l'eau distillée pour éliminer le surplus de mélange. Ils subissent enfin une polymérisation en étuve. Le gain de masse obtenu sur le noyau se situe aux environs de 2%.

Un premier gain apporté par l'invention réside dans l'utilisation de l'eau comme solvant, ce qui supprime les problèmes de toxicité rencontrés avec les solvants organiques précédents. Ce choix implique, en revanche, d'abandonner les résines classiques et de sélectionner à la place un produit comme le PVAl qui est soluble dans l'eau et dont la polymérisation consolide suffisamment le noyau. Une des difficultés rencontrées dans la mise au point de l'invention a consisté à arriver à concentrer suffisamment le mélange pour augmenter son efficacité de consolidation mécanique après polymérisation, tout en conservant une viscosité relativement faible pour bien imprégner le noyau.

Les résultats obtenus avec l'eau et le PVAl font apparaître (cf. figures 2 et 3) une augmentation nette des propriétés du matériau, qui reste, certes, inferieure à celles obtenues avec des solvants organiques de l'art antérieur mais qui est suffisante pour le procédé de fabrication des noyaux d'aubes de turbomachines. On constate ainsi que, pour des dosages de l'ordre de 100 à 200 g/l, la résistance à la rupture est en effet multipliée par 3 (contre 4 dans l'art antérieur), par rapport à une éprouvette non traitée et le module d'Young est multiplié par 2 (contre 4 dans le procédé de l'art antérieur).

On remarque également, à la vue des figures 2 et 3, qu'on améliore encore la tenue mécanique d'un noyau céramique en portant la concentration en PVAl au delà de 100g/l. En particulier, le gain obtenu sur la résistance à la rupture en flexion, est particulièrement intéressant dans la mesure où ces noyaux sont fragiles et leur manipulation très délicate. Ce gain s'obtient, certes, au détriment d'une viscosité plus importante, et qui est notamment plus élevée que la valeur limite préconisée par l'art antérieur. Il est certain qu'une trop grande viscosité est néfaste car la phase de nettoyage à l'eau pure, qui suit l'imprégnation pour ôter l'excédent de produit sur les noyaux, est rendue plus difficile. Il ne faut en effet pas insister sur certaines surfaces qui sont extrêmement fines et fragiles et dans les recoins desquelles il pourrait être difficile de déloger le produit. La demanderesse a ainsi constaté qu'au delà de 200 g/l le gain ne se justifiait pas au regard des risques encourus.

Si une plus grande concentration améliore la tenue mécanique du noyau imprégné, la gamme de fabrication doit être adaptée pour prendre en compte cette viscosité. Le produit doit alors rester plus longtemps en contact avec le noyau pour avoir le temps de pénétrer profondément sous la surface du noyau et ainsi combler correctement les pores. Le temps d'imprégnation a ainsi dû être porté à des valeurs qui ne sont pas inférieures à 30 min, à comparer à des temps extrêmement faibles, de l'ordre de 5 min, dans l'art antérieur.

En résumé, la demanderesse est allée à l'encontre de l'enseignement de l'art antérieur, qui fixait à 10g/l la concentration maximale admissible, et a constaté qu'il était alors possible d'améliorer encore la tenue mécanique des noyaux, moyennant une adaptation de la gamme de fabrication.

## Revendications

1. Procédé d'imprégnation pour le renforcement mécanique d'un noyau céramique utilisé dans la fabrication de pièces de turbomachines par fonderie à la cire perdue, comportant un trempage du noyau dans un mélange obtenu par dissolution d'alcool polyvinylique PVAl dans de l'eau suivi d'une immersion du noyau dans de l'eau pure et une polymérisation à chaud,
**caractérisé en ce que** le dosage est compris entre 100 et 200g de PVAl par litre d'eau.

2. Procédé selon la revendication1 dans lequel le temps d'imprégnation par trempage est compris entre 20 min et 1h30.

3. Procédé selon l'une des revendications 1 ou 2 dans lequel la polymérisation s'effectue à une température comprise entre 90 et 120°C.

4. Procédé selon la revendication 3 dans lequel la polymérisation s'effectue pendant une durée comprise entre 30 min et 2 heures.

5. Procédé de fabrication, par fonderie à la cire perdue, d'aubes de turbomachines présentant des cavités internes, ledit procédé comportant une étape de réalisation d'un noyau céramique représentatif desdites cavités internes, **caractérisé en ce qu'**il comporte une étape de renforcement mécanique dudit noyau par un procédé selon l'une des revendications 1 à 4.

## Patentansprüche

1. Verfahren zur Imprägnierung für die mechanische Verstärkung eines Keramikkerns, der zur Herstellung von Turbomaschinenteilen durch Feingießen verwendet wird, umfassend ein Einweichen eines Kerns in einer Mischung, die durch Lösen von Polyvinylalkohol PVAL in Wasser gefolgt von dem Eintauchen des Kerns in reines Wasser und einer heißen Polymerisation erhalten wurde, **dadurch gekennzeichnet, dass** die Dosierung zwischen 100 und 200 g PVAL pro Liter Wasser liegt.

2. Verfahren nach Anspruch 1, wobei die Zeit der Imprägnierung durch Eintauchen zwischen 20 min. und 1 h 30 liegt.

3. Verfahren nach einem der Ansprüche 1 oder 2, wobei die Polymerisation bei einer Temperatur zwischen 90 und 120 °C erfolgt

4. Verfahren nach Anspruch 3, wobei die Polymerisation für einen Zeitraum durchgeführt wird, der zwischen 30 Minuten und 2 Stunden liegt.

5. Verfahren zur Herstellung von Schaufeln von Turbomaschinen mit inneren Hohlräumen durch Feingießen, wobei das Verfahren einen Schritt des Herstellens eines Keramikkerns umfasst, der repräsentativ für die inneren Hohlräume ist, **dadurch gekennzeichnet, dass** es einen Schritt zur mechanischen Verstärkung des Kerns durch ein Verfahren nach einem der Ansprüche 1 bis 4 umfasst.

## Claims

1. Method of impregnation for mechanically reinforcing a ceramic core used in the manufacture of turbine engine parts via lost-wax casting, comprising dipping the core in a mixture obtained by dissolving polyvinyl alcohol (PVAI) in water followed by immersing the core in pure water and hot polymerisation, **characterised in that** the mixture proportion is between 100 and 200 g of PVAI per litre of water.

2. Method according to claim 1, in which the time for impregnation by dipping is between 20 minutes and 1 hour 30 minutes.

3. Method according to either claim 1 or claim 2, in which the polymerisation takes place at a temperature of between 90 °C and 120 °C.

4. Method according to claim 3, in which the polymerisation takes place for a period of between 30 minutes and 2 hours.

5. Method for manufacturing, by lost-wax casting, turbine engine blades with internal cavities, said method comprising a step of producing a ceramic core representing said internal cavities, **characterised in that** it comprises a step of mechanically reinforcing said core via a method according to any of claims 1 to 4.
